# EUROPÄISCHE PATENTSCHRIFT

(11) **EP 4 356 027 B1**
(45) Veröffentlichungstag und Bekanntmachung des Hinweises auf die Patenterteilung: **09.07.2025**
(21) Anmeldenummer: 22730454.0
(22) Anmeldetag: 24.05.2022
(51) Int. Cl.: F16H 63/34

(54) **GETRIEBE MIT EINER PARKSPERRE EINES ELEKTRISCH ANGETRIEBENEN FAHRZEUGS**
TRANSMISSION WITH A PARKING LOCK OF AN ELECTRICALLY DRIVEN VEHICLE
BOÎTE DE VITESSES AVEC UN FREIN DE STATIONNEMENT D'UN VÉHICULE À ENTRAÎNEMENT ÉLECTRIQUE

(30) Priorität: 17.06.2021 DE 102021206174
(43) Veröffentlichungstag der Anmeldung: 24.04.2024
(73) Patentinhaber: Robert Bosch GmbH, 70442 Stuttgart (DE)
(72) Erfinder: GERUNDT, Oliver, 71292 Friolzheim (DE); SCHEU, Nico, 71292 Friolzheim (DE); FEIGL, Markus, 71706 Markgroeningen (DE)
(86) Internationale Anmeldenummer: PCT/EP2022/064052
(87) Internationale Veröffentlichungsnummer: WO 2022/263125

(56) Entgegenhaltungen:
- DE-A1- 102011 016 584
- DE-A1- 102019 205 602
- DE-A1- 102019 205 608
- DE-A1- 102019 209 470
- DE-A1- 102019 217 973

## Beschreibung

### Technisches Gebiet

Die Erfindung bezieht sich auf ein Getriebe mit einer Parksperre eines elektrisch angetriebenen Fahrzeugs, wobei die Parksperre ein Parksperrenrad umfasst, dem eine Sperrklinke zugeordnet ist und welches an einer Welle aufgenommen ist.

### Stand der Technik

DE 10 2011 016 584 A1 offenbart ein Klinkenrad, welches drehfest mit einem Achsabschnitt verbunden ist. Im Klinkenrad ist ein als Torsionsdämpfer ausgebildeter Achsabschnitt ausgeführt, der sich zumindest einseitig aus einer durch das Klinkenrad aufgespannten Ebene erstreckt, die zumindest abschnittsweise eine Drehachse des Klinkenrads bildet. Zwischen dem Klinkenrad und dem Verbindungsabschnitt ist ein Bereich ausgebildet, welcher relativ zu der Welle verdrehbar ist. Dieser Bereich weist eine Längserstreckung auf, die insbesondere um mehr als den Faktor 1,5 größer ist als die Längserstreckung des Verbindungsabschnitts. Eine Welle ist zumindest abschnittsweise als Hohlwelle ausgeführt, die den besagten Abschnitt im Wesentlichen vollständig aufnimmt.

DE 10 2007 062 349 A1 offenbart eine Parksperrenvorrichtung in einem Getriebe, wobei das Parksperrenrad in seinem radial äußeren Umfang Zähne aufweist. Diese wirkt mit einer Parksperrenklinke zusammen, die in Eingriff mit der Außenverzahnung des Parksperrenrads gebracht werden kann. Das Parksperrenrad ist als Speichenrad ausgebildet. Dadurch stellt dieses ein torsionsweiches Bauteil dar. Das Parksperrenrad umfasst einen inneren Ring, der drehfest mit einer Getriebewelle verbunden ist sowie einen steifer ausgeführten äußeren Ring, der mit der Außenverzahnung versehen ist. Der äußere Ring und der innere Ring sind über Speichen miteinander verbunden, wobei die Speichen aus einem biegeweichen Material gefertigt sind.

DE 10 2009 030 005 A1 offenbart einen Sperrmechanismus, insbesondere eine Parksperre für eine Getriebewelle eines Kraftfahrzeugs. Das Klinkenrad umfasst eine Mehrzahl von Klinkenradzähnen sowie zwischen Klinkenradzähnen angeordnete Ausnehmungen. Das Klinkenrad weist Dämpfungselemente auf, die der Dämpfung bei Betätigung des Sperrmechanismus der auf die Klinkenradzähne wirkenden Kräfte dienen. Die Dämpfungselemente sind insbesondere in den U-förmig ausgebildeten Ausnehmungen zwischen den Klinkenradzähnen angeordnet.

Aus der DE 10 2019 217 973 A1 ist eine Parksperre eines Fahrzeugs bekannt, wobei die Parksperre ein Parksperrenrad umfasst, dem eine Sperrklinke zugeordnet ist. Die Sperrklinke wird über ein Nockenrad betätigt, das mittels eines Torsionsfederelementes an einer Welle eines Stellantriebs gelagert ist.

Aus DE 10 2019 209 470 A1 ist ein Getriebe mit einer Parksperre eines elektrisch angetriebenen Fahrzeugs bekannt, wobei die Parksperre ein Parksperrenrad umfasst, dem eine Sperrklinke zugeordnet ist und welches an einer Welle aufgenommen ist. Das Parksperrenrad ist an seinem Sitz an der Welle über ein Dämpfungselement gelagert, das in Verbindung mit einem in axialer Richtung der Welle wirkenden Tellerfederelement als Torsionsdämpfer wirkt.

Aus der DE 10 2019 205 608 A1 ist eine Parksperre für eine elektrische Maschine bekannt, wobei die Parksperre ein Parksperrenrad umfasst, dem eine Sperrklinke zugeordnet ist und welches an einer Welle aufgenommen ist. Das Parksperrenrad weist an seinem Innenumfang eine Verzahnung zum formschlüssigen Verbinden mit der Welle auf.

Aus der DE 10 2019 205 602 A1 ist eine Parksperrenvorrichtung für eine elektrische Maschine bekannt, wobei die Parksperrenvorrichtung ein Parksperrenrad umfasst, dem eine Sperrklinke zugeordnet ist und welches an einer Welle aufgenommen ist. Das Parksperrenrad ist an seiner Stirnseite mit einer Schrägverzahnung versehen, die in einer korrespondierende stirnseitige Schrägverzahnung einer koaxial zu einer ersten Welle angeordnete zweite Welle eingreift. Das Parksperrenrad stützt sich in axialer Richtung über ein Federelement an der ersten Welle ab.

Bei einigen der aus dem Stand der Technik bekannten Lösungen für Parksperren wird eine Drehweichheit dadurch erreicht, dass eine Rotorwelle und eine Torsionswelle beispielsweise ineinander montiert und auf einer Seite stoffschlüssig miteinander zu verbinden sind. Dies bedeutet, dass eine erheblich größere Masse in eine Drehbewegung versetzt werden muss, wozu naturgemäß größere Kräfte erforderlich sind. Des Weiteren lässt sich die Torsionssteifigkeit beziehungsweise Drehweichheit nur bedingt einstellen. Hinsichtlich einer Varianz bei Einbau in verschiedenen Einbaupositionen ist dafür Sorge zu tragen, dass anders konfigurierte Rotorwellen eingebaut werden, die eine andere Lageranordnung aufweisen. Dies bedeutet naturgemäß einen erheblich höheren Aufwand hinsichtlich der Entwicklung, der Konstruktion sowie der Fertigung, Montage und Logistik.

### Darstellung der Erfindung

Erfindungsgemäß wird ein Getriebe mit einer Parksperre eines elektrisch angetriebenen Fahrzeugs vorgeschlagen, wobei die Parksperre ein Parksperrenrad umfasst, dem eine Sperrklinke zugeordnet ist und welches an einer Welle aufgenommen ist, wobei das Parksperrenrad eine an seinem Sitz an der Welle integrierte Torsionsfeder umfasst. Erfindungsgemäß ist die Torsionsfeder als Torsionshülse zwischen dem Parksperrenrad und der Welle ausgeführt ist, wobei die Torsionshülse eine Schlitzung aufweist, die in deren Längsrichtung verläuft. Die Drehweichheit der Torsionshülse lässt sich vorteilhaft durch die Anzahl von Schlitzungen, die Schlitzlänge der Schlitzungen in

Längsrichtung verlaufend, die Schlitzweite der Schlitzungen und die Abstände der Schlitzungen von Stirnseiten der Torsionshülse einstellen.

Durch diese Lösung kann eine sehr kompakt bauende Einheit zwischen Parksperrenrad und einer Welle erreicht werden, die sich insbesondere durch eine Drehweichheit in Umfangsrichtung auszeichnet, so dass bei einem abrupten Einrasten der Sperrklinke in einen Außenumfang des Parksperrenrads sich ergebende stoßartige Belastungen nicht unmittelbar in eine elektrische Maschine eingekoppelt werden können, demzufolge die auftretenden mechanischen Belastungsspitzen erheblich herabgesetzt, da gedämpft, sind. Dies erlaubt eine günstigere Dimensionierung der mechanischen Komponenten, da geringere Maximalkräfte zu berücksichtigen sind.

Es besteht ein Kraftfluss ausgehend vom Parksperrenrad über die als Torsionshülse ausgebildete Torsionsfeder unmittelbar in die Welle In einer weiteren vorteilhaften Ausführungsvariante der erfindungsgemäß vorgeschlagenen Lösung ist die als Torsionshülse ausgebildete Torsionsfeder einerseits durch eine Mantelfläche der Welle und anderseits durch eine als Gleitlager dienende Buchse an der Welle abgestützt.

Bei der erfindungsgemäß vorgeschlagenen Lösung, speziell durch die Ausgestaltung der Torsionshülse, kann sich bei Krafteinwirkung auf das Parksperrenrad die Welle relativ zum Parksperrenrad verdrehen. Dadurch wird eine Dämpfung von mechanischen Belastungsspitzen erreicht.

Die Torsionsfeder bildet mit der Welle ein Feder-Dämpfer-System. Während durch den federnden Teil die ruckartige Bewegung abgebremst wird, erfolgt eine Verhinderung des Aufschaukelns von Schwingungen im Federteil durch eine Dämpfung durch Reibung zwischen den beiden, Komponenten Torsionsfeder und Welle.

In einer Ausführungsmöglichkeit ist das Parksperrenrad mit der als Torsionshülse ausgebildeten Torsionsfeder an einer ersten Fügestelle und die als Torsionshülse ausgebildete Torsionsfeder an der zweiten Fügestelle mit der Welle kraft- oder stoffschlüssig gefügt.

Durch die vorstehend genannte Ausführungsvariante ergibt sich ein Kraftfluss durch Parksperrenrad, Torsionshülse über die ersten und zweiten Fügestellen unmittelbar in die Welle.

Die Welle kann als Hohlwelle ausgeführt, insbesondere als eine durch Hochdruckinnenumformen umgeformte Welle ausgeführt sein.

Bei einer vorteilhaften Ausgestaltung der Parksperre ist eine Wandstärke der als Torsionshülse ausgebildeten Torsionsfeder geringer als die Wandstärke der Welle.

### Vorteile der Erfindung

Bei der erfindungsgemäß vorgeschlagenen Lösung ist eine Torsionsfeder in Gestalt einer Torsionshülse am Sitz des Parksperrenrads an einer Welle realisiert. Bei der in axiale Richtung gesehen relativ kurz bauenden Torsionshülse handelt es sich um ein kostengünstig und platzsparend handhabbares Bauteil, welches eine radiale Führung aufweist und sich durch ein geringes Einbaugewicht auszeichnet. Durch die erfindungsgemäß vorgeschlagene Lösung kann die Übertragung stoßartig auftretender mechanischer Belastungsspitzen in dem Getriebe, beispielsweise in einem Antriebsstrang einer elektrischen Maschine vermieden werden.

Durch die erfindungsgemäß vorgeschlagene Lösung kann die Drehweichheit und damit die Torsionssteifigkeit auch durch die Wandstärkenunterschiede zwischen der Torsionsfeder einerseits und der Welle andererseits beeinflusst werden. Die Wandstärke der Torsionsfeder, die als Torsionshülse ausgebildet ist, ist stets geringer als die Wandstärke der die Torsionsfeder abstützenden Welle bemessen.

Des Weiteren besteht die Möglichkeit der Gleichteileverwendung hinsichtlich einer Varianz von E-Achsen-Modulen in elektrifizierten Antriebssträngen für elektrische Fahrzeuge.

### Kurze Beschreibung der Zeichnungen

Ausführungsformen der Erfindung werden anhand der Zeichnungen und der nachfolgenden Beschreibung näher erläutert.

Es zeigen:
- Figur 1: eine nur der Erläuterung dienende nicht erfindungsgemäße Kombination aus einer Parksperre und einem Getriebe, bei der ein Parksperrenrad mittels einer als Mäanderhülse ausgebildeten Torsionsfeder auf einem hülsenförmigen Träger angeordnet ist,
- Figur 2: eine Darstellung des sich einstellenden Kraftflusses bei der Parksperre gemäß Figur 1,
- Figur 3: eine perspektivische Ansicht einer auf einem hülsenförmigen Träger aufgenommenen, als Mäanderhülse ausgebildeten Torsionsfeder, die nicht unter den Schutzumfang des Anspruchs 1 fällt,
- Figur 4: eine alternierende Anordnung aus Mäanderhülsen und zwischen diesen angeordneten hülsenförmigen Trägern, wobei eine solche Anordnung nicht unter den Schutzumfang des Anspruchs 1 fällt,
- Figur 5: eine Ausführungsvariante eines erfindungsgemäßen Getriebes mit einer Parksperre, wobei das Parksperrenrad auf einer Torsionshülse aufgenommen ist, die ihrerseits durch eine als Gleitlager dienende Buchse und andererseits durch den Mantel einer Welle abgestützt ist und
- Figur 6: eine perspektivische Ansicht der als Torsionshülse ausgebildeten Torsionsfeder auf Figur 5 mit sich in Axialrichtung erstreckenden Schlitzungen.

### Ausführungsformen der Erfindung

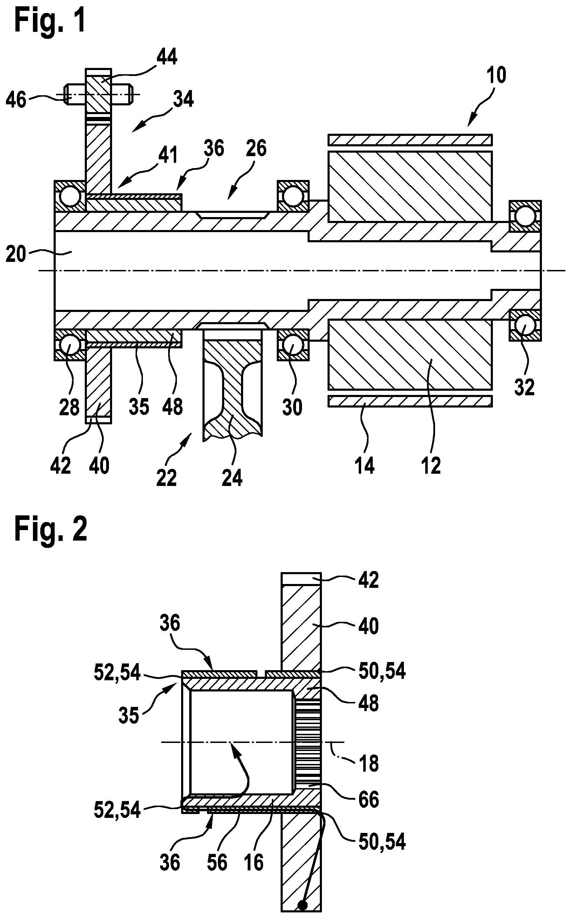

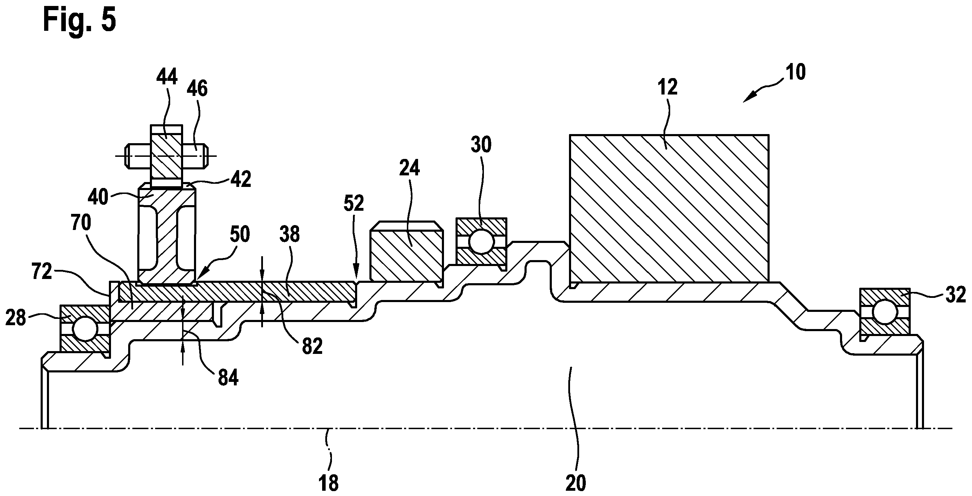

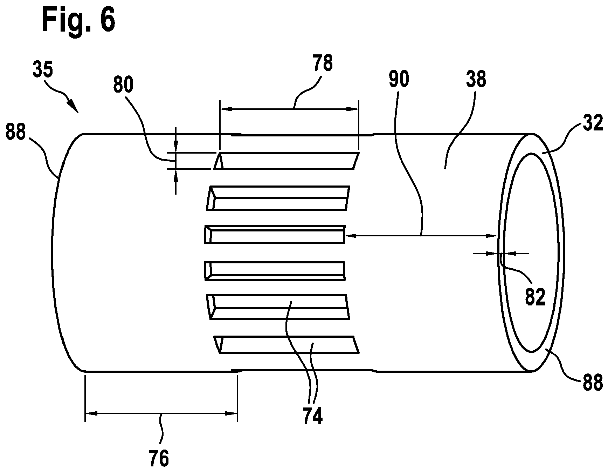

In der nachfolgenden Beschreibung werden gleiche oder ähnliche Elemente mit gleichen Bezugszeichen bezeichnet, wobei auf eine wiederholte Beschreibung dieser Elemente in Einzelfällen verzichtet wird. Die Figuren 1 bis 4 stellen hierbei Gegenstände dar, die nicht unter den Schutzumfang des Anspruchs 1 fallen und die Figuren 5 und 6 stellen der

Gegenstand der Erfindung nur schematisch dar.

Figur 1 ist eine Parksperre 34 zu entnehmen. In Figur 1 ist eine elektrische Maschine 10 in schematischer Weise angedeutet, die einen stationär angeordneten Stator 14 umfasst sowie einen auf einer Welle 16 aufgenommenen Rotor 12. Die Welle 16 weist einen Hohlraum 20 auf und ist symmetrisch zu ihrer Symmetrieachse 18 ausgebildet. Die Welle 16 ist als Hohlwelle ausgeführt, wobei der Hohlraum 20 durch spanabhebende Bearbeitung gefertigt sein kann; alternativ besteht die Möglichkeit, die Welle 16 auch mittels Hochdruckinnenumformens zu fertigen, d. h. auf nicht-spanabhebende Weise herzustellen.

Figur 1 zeigt des Weiteren, dass auf der Welle 16 ein Verzahnungsabschnitt 26 ausgeführt wird, der mit einer Verzahnung eines nur schematisch dargestellten Getrieberads 24 eines Getriebes 22 kämmt. Das Getriebe 22 kann ein- oder mehrstufig ausgeführt sein, was jedoch im vorstehenden Zusammenhang von untergeordneter Bedeutung ist. Aus der Darstellung gemäß Figur 1 geht des Weiteren hervor, dass die Welle 16 mittels eines ersten Lagers 28, eines zweiten Lagers 30 und eines dritten Lagers 32 in einem hier nicht näher dargestellten Gehäuse gelagert ist. Bei den Lagern 28, 30, 32 handelt es sich beispielsweise um Wälzlager, wie zum Beispiel Wälz- und Zylinderrollenlager, Kegelrollenlager oder dergleichen.

Die Parksperre 34, die in Figur 1 in schematischer Weise angedeutet ist, umfasst neben einem Parksperrenrad 40 eine dessen Außenverzahnung 42 zugeordnete Sperrklinke 44. Die Sperrklinke 44 ihrerseits ist um eine Schwenkachse 46 bewegbar. Das Parksperrenrad 40 ist in seinem Sitz 41 mittels einer Torsionsfeder 35 auf einem hülsenförmigen Träger 48 gelagert.

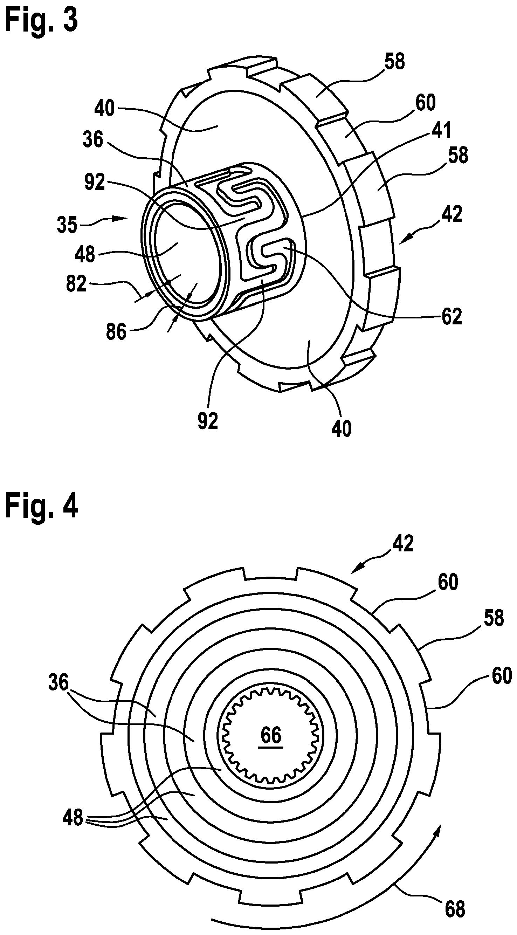

In der Figur 1 ist die Torsionsfeder 35 als Mäanderhülse 36 ausgeführt und umfasst mindestens einen mäanderförmig verlaufenden Steg 92, wie in der perspektivischen Draufsicht auf die Torsionsfeder 35 gemäß Figur 3 dargestellt.

Figur 2 zeigt den Verlauf eines Kraftflusses 56 durch die Anordnung aus Parksperrenrad 40, Torsionsfeder 35, hülsenförmigem Träger 48 in die Welle 16. In der Darstellung gemäß Figur 2 sind der hülsenförmige Träger 48 und die Welle 16 ein Bauteil.

Der Kraftfluss 56 verläuft, beispielsweise ausgehend vom durch die Sperrklinke 44 gemäß Figur 1 blockierten Parksperrenrad 40 über eine erste Fügestelle 50 in die Torsionsfeder 35, hier ausgebildet als Mäanderhülse 36 oder Mäanderrohr 36. Über eine zweite Fügestelle 52 verläuft der Kraftfluss 56 entweder unmittelbar in die Welle 16 oder in einem auf dieser drehfest gelagerten hülsenförmigen Träger 48, wie er in Figur 1 dargestellt ist. Aus der Schnittdarstellung gemäß Figur 2 ergibt sich des Weiteren, dass an der Welle 16, die symmetrisch zu ihrer Symmetrieachse 18 ausgeführt ist, eine Mehrkeilprofilierung 66 ausgeführt ist.

Figur 3 zeigt in perspektivischer Ansicht eine Darstellung der Torsionsfeder 35, hier ausgebildet als Mäanderhülse 36 oder Mäanderrohr 36. Aus der perspektivischen Wiedergabe gemäß Figur 3 ergibt sich, dass die Torsionsfeder 35 durch mindestens einen mäanderförmig verlaufenden Steg 92 charakterisiert ist. Zwischen den Seiten der Stege verbleiben in diesem im Wesentlichen hülsenförmig ausgebildeten Bauteil Freiräume 62, in welche bei einer Torsionsbeanspruchung die mäanderförmig verlaufenden Stege 92 ausweichen und auf diese Weise mechanische Energie in Verformungsenergie umwandeln, d. h. dämpfend wirken. Das Parksperrenrad 40 ist an seinem Außenumfang mit der Außenverzahnung 42 versehen, die im Wesentlichen aus einer alternierenden Abfolge von Zähnen 58 und Zahnlücken 60 besteht. Im Bereich seines Sitzes 41 weist das Parksperrenrad 40 besagte als Mäanderhülse 36 ausgebildete Torsionsfeder 35 auf.

Die im Zusammenhang mit Figur 2 erwähnten Fügestellen 50 und 52 werden insbesondere als stoffschlüssige Fügestellen, d. h. als Schweißnähte ausgeführt, so dass der Kraftfluss 56 in der in Figur 2 dargestellten Weise geleitet werden kann.

Aus Figur 3 geht hervor, dass eine Wandstärke 86 eines hülsenförmigen Trägers 48 beziehungsweise die Wandstärke 84 einer Welle 16 größer bemessen ist als eine Wandstärke 82 der Torsionsfeder 35, hier ausgeführt als Mäanderrohr 36 oder Mäanderhülse 36.

Figur 4 zeigt eine Parksperre 34, bei der eine alternierende Anordnung 64 aus hülsenförmigen Trägern 48 einerseits und Mäanderhülsen 36 andererseits dargestellt ist. Bei der hier vorgeschlagenen Parksperre 34 greift die Sperrklinke 44 in die Außenverzahnung 42 des Parksperrenrads 40 ein, so dass die Welle 16 unmittelbar zum Stillstand kommt. Um die dabei auftretenden Kräfte auf die Welle 16 und damit auf die elektrische Maschine 10 abzudämpfen, wird durch die Torsionsfeder 35, hier ausgebildet als Mäanderhülse 36 oder Mäanderrohr 36 eine drehweiche Lagerung des Parksperrenrads 40 realisiert. Diese Drehweichheit wird über den mindestens einen mäanderförmig verlaufenden Steg 92 gemäß Figur 3 erreicht. Bei Krafteinwirkung verschiebt sich der mindestens eine mäanderförmig verlaufende Steg 92 der Mäanderhülse 36 beziehungsweise des Mäanderrohrs 36 in Umfangsrichtung, so dass sich die trägerförmige Hülse 48 sowie das Parksperrenrad 40 relativ zueinander verdrehen können. Drehpunkt ist dabei die Mittelachse, d. h. die Symmetrieachse 18 der Welle 16. Bei der Parksperre 34 wird ein Feder- sowie ein Dämpfungselement realisiert. Über das Dämpfungselement kann ein gegebenenfalls mögliches Aufschwingen des Federelements abgedämpft werden. In der vorliegenden Lösung wirkt die Torsionsfeder 35, ausgebildet als Mäanderhülse 36 beziehungsweise Mäanderrohr 36, als Feder, während die Dämpfung zwischen dieser und dem hülsenförmigen Träger 48 durch die Reibung zwischen den beiden im Wesentlichen rohr- oder hülsenförmig gestalteten Bauelementen erzeugt wird.

Figur 5 zeigt eine erfindungsgemäß Ausführungsmöglichkeit der erfindungsgemäß vorgeschlagenen Kombination aus Getriebe und Parksperre 34. In Figur 5 ist die Welle 16 als eine mittels Hochdruckinnenumformens dargestellte Hohlwelle mit einem Hohlraum 20 beschaffen, wobei die Welle 16 symmetrisch zur Symmetrieachse 18 ausgeführt ist. Die Welle 16 gemäß der Darstellung in Figur 5 ist ebenfalls im ersten Lager 28, im zweiten Lager 30 sowie im dritten Lager 32 gelagert und weist ein an ihrem Umfang drehfest aufgenommenes Getrieberad 24 sowie den Rotor 12 der hier nicht näher dargestellten elektrischen Maschine 10 auf.

Wie Figur 5 des Weiteren entnommen werden kann, ist auf der Welle 16 eine Torsionsfeder 35 verbaut, die als Torsionshülse 38 ausgeführt ist. Die Torsionshülse 38 ist koaxial zur Welle 16 gesteckt. Die Torsionshülse 38 ist daneben auch durch eine Buchse 70, die als Gleitlager dient, abgestützt. Die Buchse 70 weist eine Stirnseite 72 auf. Beidseitig wird die als Torsionshülse 38 ausgebildete Torsionsfeder 35 stoffschlüssig gefügt. Die erste Fügestelle 50 befindet sich zwischen Parksperrenrad 40 und der Torsionshülse 38; die zweite Fügestelle 52 befindet sich zwischen einer Stirnseite der Torsionshülse 38 und einer Schulter im Mantel der Welle 16. Optional kann die Torsionshülse 38 auch auf die Welle 16 aufgepresst oder aufgeschrumpft werden, gleiches gilt für das Parksperrenrad 40 der Parksperre 34.

Die Torsionshülse 38 hat ein geringeres Widerstands- sowie Flächenträgheitsmoment verglichen mit denjenigen der Welle 16, was zu einer höheren Torsion führt. Dies wird über eine geringere Wandstärke 82 der Torsionsfeder 35, ausgeführt als Torsionshülse 38, gegenüber der Wandstärke 84 der Welle 16 erreicht. Während der hülsenförmige Träger 48 gemäß Figur 1 vollständig durch die Welle 16 abgestützt ist, ist die als Torsionshülse 38 ausgebildete Torsionsfeder 35 gemäß der Darstellung in Figur 5 einerseits durch die Mantelfläche der Welle 16 und andererseits durch die als Gleitlager dienende Buchse 70 abgestützt.

Aus der Darstellung gemäß Figur 6, welche sich auf die Ausgestaltung nach Figur 5 bezieht, ergibt sich, dass die Torsionshülse 38 mit Schlitzungen 74 versehen werden kann. Damit kann die Drehweichheit beziehungsweise Torsionssteifigkeit der als Torsionsfeder 35 dienenden Torsionshülse 38 definiert eingestellt werden. Die Drehweichheit beziehungsweise Torsionssteifigkeit der in Figur 6 in perspektivischer Wiedergabe dargestellten Torsionshülse 38 kann durch eine Schlitzlänge 78 der Schlitzung 74 in Längsrichtung 76 ebenso beeinflusst werden wie durch eine Schlitzweite 80, in der die Schlitzungen 74 im Umfang der Torsionshülse 38 ausgeführt werden. Die Wandstärke 82 der Torsionshülse 38 ist geringer als die bereits erwähnte Wandstärke 86 des hülsenförmigen Trägers 48 gemäß Figur 1 beziehungsweise die Wandstärke 84 der Welle 16 gemäß der Darstellung in Figur 5. Des Weiteren lässt sich die Drehweichheit beziehungsweise Torsionssteifigkeit der Torsionshülse 38 auch durch die Wahl eines Abstands 90 zwischen den jeweiligen Stirnseiten 88 der Torsionshülse 38 und den Enden der sich in Längsrichtung 76 erstreckenden Schlitzungen 74 sowie durch deren Anzahl voreinstellen.

Die Erfindung ist nicht auf das in den Figuren 5 und 6 beschriebene Ausführungsbeispiel und die darin hervorgehobenen Aspekte beschränkt. Vielmehr ist innerhalb des durch die Ansprüche angegebenen Bereichs eine Vielzahl von Abwandlungen möglich.

## Patentansprüche

1. Getriebe (22) mit einer Parksperre (34) eines elektrisch angetriebenen Fahrzeugs, wobei die Parksperre (34) ein Parksperrenrad (40) umfasst, dem eine Sperrklinke (44) zugeordnet ist und welches an einer Welle (16) aufgenommen ist, wobei das Parksperrenrad (40) eine an seinem Sitz (41) an der Welle (16) integrierte Torsionsfeder (35) umfasst, **dadurch gekennzeichnet, dass** die Torsionsfeder (35) als Torsionshülse (38) zwischen dem Parksperrenrad (40) und der Welle (16) ausgeführt ist, wobei die Torsionshülse (38) eine Schlitzung (74) aufweist, die in deren Längsrichtung (76) verläuft.

2. Getriebe (22) mit einer Parksperre (34) gemäß Anspruch 1, **dadurch gekennzeichnet, dass** die als Torsionshülse (38) ausgebildete Torsionsfeder (35) einerseits durch eine Mantelfläche der Welle (16) und andererseits durch eine als Gleitlager dienende Buchse (70) an der Welle (16) abgestützt ist.

3. Getriebe (22) mit einer Parksperre (34) gemäß den Ansprüchen 1 oder 2, **dadurch gekennzeichnet, dass** die Torsionshülse (38) so ausgestaltet ist, dass bei Krafteinwirkung auf das Parksperrenrad (40) die Welle (16) relativ zum Parksperrenrad (40) verdrehbar ist.

4. Getriebe (22) mit einer Parksperre (34) gemäß Anspruch 1 oder 2, **dadurch gekennzeichnet, dass** das Parksperrenrad (40) mit der als Torsionshülse (38) ausgebildeten Torsionsfeder (35) an einer ersten Fügestelle (50) und die als Torsionshülse (38) ausgebildete Torsionsfeder (35) an einer zweiten Fügestelle (52) mit der Welle (16) kraft- oder stoffschlüssig gefügt ist.

5. Getriebe (22) mit einer Parksperre (34) gemäß den Ansprüchen 1 bis 4, **dadurch gekennzeichnet, dass** die Welle (16) als Hohlwelle ausgeführt ist, insbesondere als eine durch Hochdruckinnenumformen umgeformte Welle.

6. Getriebe (22) mit einer Parksperre (34) gemäß den Ansprüchen 1 bis 5, **dadurch gekennzeichnet, dass** eine Wandstärke (82) der als Torsionshülse (38) ausgebildeten Torsionsfeder (35) geringer ist als eine Wandstärke (84) der Welle (16).

## Claims

1. Transmission (22) with a parking lock (34) of an electrically driven vehicle, wherein the parking lock (34) comprises a parking lock wheel (40), to which a locking pawl (44) is assigned and which is mounted on a shaft (16), wherein the parking lock wheel (40) comprises a torsion spring (35) integrated on its seat (41) on the shaft (16), **characterized in that** the torsion spring (35) is designed as a torsion sleeve (38) between the parking lock wheel (40) and the shaft (16), wherein the torsion sleeve (38) has a slot pattern (74) which extends in its longitudinal direction (76).

2. Transmission (22) with a parking lock (34) according to Claim 1, **characterized in that** the torsion spring (35) formed as a torsion sleeve (38) is supported on the shaft (16) firstly by a shell surface of the shaft (16) and secondly by a bush (70) serving as a plain bearing.

3. Transmission (22) with a parking lock (34) according to Claims 1 or 2, **characterized in that** the torsion sleeve (38) is designed such that, when force is applied to the parking lock wheel (40), the shaft (16) can be rotated relative to the parking lock wheel (40).

4. Transmission (22) with a parking lock (34) according to Claim 1 or 2, **characterized in that** the parking lock wheel (40) with the torsion spring (35) formed as a torsion sleeve (38) is joined to the shaft (16) in a force-fit or integrally joined connection at a first joining point (50) and the torsion spring (35) formed as a torsion sleeve (38) is joined to the shaft (16) in a force-fit or material-fit connection at a second joining point (52).

5. Transmission (22) with a parking lock (34) according to Claims 1 to 4, **characterized in that** the shaft (16) is designed as a hollow shaft, in particular as a shaft reshaped by high-pressure internal reshaping.

6. Transmission (22) with a parking lock (34) according to Claims 1 to 5, **characterized in that** a wall thickness (82) of the torsion spring (35) formed as a torsion sleeve (38) is less than a wall thickness (84) of the shaft (16).

## Revendications

1. Transmission (22) dotée d'un frein de stationnement (34) d'un véhicule à entraînement électrique, le frein de stationnement (34) comprenant une roue de verrouillage de stationnement (40) à laquelle est associé un cliquet de verrouillage (44) et qui est logée sur un arbre (16), la roue de verrouillage de stationnement (40) comprenant un ressort de torsion (35) intégré à son siège (41) sur l'arbre (16), **caractérisé en ce que** le ressort de torsion (35) est mis en œuvre sous forme de manchon de torsion (38) entre la roue de verrouillage de stationnement (40) et l'arbre (16), le manchon de torsion (38) présentant un ensemble d'encoches (74) qui s'étend dans sa direction longitudinale (76).

2. Transmission (22) dotée d'un frein de stationnement (34) selon la revendication 1, **caractérisée en ce que** le ressort de torsion (35) conçu sous forme de manchon de torsion (38) prend appui sur l'arbre (16) d'une part par une surface latérale de l'arbre (16) et d'autre part par une douille (70) servant de palier lisse.

3. Transmission (22) dotée d'un frein de stationnement (34) selon les revendications 1 ou 2, **caractérisée en ce que** la douille de torsion (38) est conçue de telle sorte que, lorsqu'une force est exercée sur la roue de verrouillage de stationnement (40), l'arbre (16) peut être mis en rotation par rapport à la roue de verrouillage de stationnement (40).

4. Transmission (22) dotée d'un frein de stationnement (34) selon la revendication 1 ou 2, **caractérisée en ce que** la roue de verrouillage de stationnement (40) est assemblée par complémentarité de force ou de matériau avec le ressort de torsion (35) conçu sous forme de manchon de torsion (38) au niveau d'un premier point d'assemblage (50) et le ressort de torsion (35) conçu sous forme de manchon de torsion (38) est assemblé avec l'arbre (16) au niveau d'un deuxième point d'assemblage (52).

5. Transmission (22) dotée d'un frein de stationnement (34) selon l'une quelconque des revendications 1 à 4, **caractérisée en ce que** l'arbre (16) est mis en œuvre sous forme d'arbre creux, en particulier sous forme d'arbre formé par formage interne sous haute pression.

6. Transmission (22) dotée d'un frein de stationnement (34) selon l'une quelconque des revendications 1 à 5, **caractérisée en ce qu'**une épaisseur de paroi (82) du ressort de torsion (35) conçu sous forme de manchon de torsion (38) est inférieure à une épaisseur de paroi (84) de l'arbre (16).
